# FASCICULE DE BREVET EUROPEEN

(11) **EP 1 200 808 B1**
(45) Date de publication et mention de la délivrance du brevet: **13.10.2004**
(21) Numéro de dépôt: 00944026.4
(22) Date de dépôt: 11.07.2000
(51) Int. Cl.: G01H 3/08, G01M 17/02

(54) **METHODE DE PREVISION DE LA PERFORMANCE CONFORT D'UN VEHICLE EQUIPE D'UN SYSTEME DE LIAISON AU SOL**
VERFAHREN ZUR VORHERSAGE DES KOMFORTGRADES EINES FAHRZEUGES, DAS MIT EINEM VERBINDUNGSSYSTEM ZUM BODEN AUSGESTATTET IST
METHOD FOR PREDICTING THE COMFORT EFFICIENCY OF A VEHICLE EQUIPPED WITH A SYSTEM LINKING IT TO THE GROUND

(30) Priorité: 13.07.1999 FR 9909218; 29.02.2000 FR 0002797
(43) Date de publication de la demande: 02.05.2002
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: DORMEGNIE, Eric, F-63000 Clermont-Ferrand (FR); FABRY, Pierre, F-63100 Clermont-Ferrand (FR); FRAYSSE, Patrice, F-63400 Chamalières (FR)
(74) Mandataire: Diernaz, Christian
(86) Numéro de dépôt international: PCT/EP2000/006568
(87) Numéro de publication internationale: WO 2001/004589

(56) Documents cités:
- EP-A- 0 886 130
- KNIGHT J SCOTT ET AL: "Reciprocity technique for the prediction of road noise transmission into automobile cabins" PROCEEDINGS OF THE 1997 NATIONAL CONFERENCE ON NOISE CONTROL ENGINEERING, NOISE-CON. PART 2 (OF 2);UNIVERSITY PARK, PA, USA JUN 15-17 1997, vol. 1, 1997, pages 377-382, XP000892727 Proc Natl Conf Noise Control Eng;Proceedings - National Conference on Noise Control Engineering 1997 Inst of Noise Control Engineering, Poughkeepsie, NY, USA

## Description

L'invention concerne une méthode de prévision des niveaux acoustique et vibratoire à l'intérieur d'un véhicule roulant sur un sol présentant un ou plusieurs obstacles ou sur un sol de granulométrie donnée.

L'inconfort perçu par le conducteur et les passagers d'un véhicule au cours d'un roulage sur un ou plusieurs obstacles (comme par exemple des bouches d'égout, des raccords de bitume, des joints divers, des graviers, etc.) revêt deux aspects distincts. Un premier aspect est de nature vibratoire et se manifeste par des vibrations du plancher du véhicule, des sièges, du volant. Un second aspect est de nature acoustique, et se manifeste par le bruit créé à l'intérieur du véhicule par les vibrations de différentes parties dudit véhicule. Le niveau d'inconfort ressenti par les occupants d'un véhicule dépend notamment de'la caisse, du système mécanique de liaison au sol, de la vitesse de roulage et bien entendu du type d'obstacle sur la chaussée.

Définition des termes employés dans ce qui suit :
- la "performance confort" correspond au niveau acoustique et/ou vibratoire mesurable à l'intérieur d'un véhicule roulant sur une chaussée (ou un moyen d'essai) pourvu d'au moins un obstacle de dimensions déterminées;
- "système de liaison au sol" : ensemble d'éléments du véhicule assurant le lien entre une ou plusieurs des surfacés de contact entre le véhicule et le sol et un ou plusieurs points dudit véhicule; dans tous les cas, le système de liaison au sol comporte au moins un pneumatique et. sa roue de montage;
- "caisse" : ensemble des éléments du véhicule complémentaire du système de liaison au sol;
- "points d'attache" : points qui lient le système de liaison au sol à la caisse;
- "fonction de transfert globale" : fonction qui comprend deux parties, une première partie concerne le bruit dans l'habitacle du véhicule et une seconde partie les vibrations en certains points prédéterminés dans le même habitacle;
- "système référence de liaison au sol" : système de liaison au sol équipant le véhicule et dont on dispose pour obtenir la fonction de transfert globale;
- "système prototype de liaison au sol" : système de liaison au sol dont on cherche à prévoir l'incidence sur la performance confort sur le même véhicule équipé de ce système prototype au lieu du système référence sans pour autant disposer dudit véhicule.

Par exemple, un système de liaison au sol peut être constitué d'un pneumatique et de sa roue de montage : dans ce cas, le point d'attache est le centre roue. La fonction de transfert globale permet de restituer les niveaux de vibration à l'intérieur de la caisse d'un véhicule à partir des efforts mesurés au centre roue.

Plusieurs méthodes sont connues de l'homme du métier en vue d'évaluer la performance confort d'un nouveau système de liaison au sol pour un véhicule donné et lui permettant d'optimiser ledit système de liaison au sol. L'optimisation consistant à obtenir des caractéristiques d'un système de liaison qui procurent un niveau de confort sensiblement amélioré.

Par exemple, en vue d'évaluer et optimiser la performance confort d'un véhicule équipé d'un nouveau système de liaison au sol, l'homme du métier peut mettre en oeuvre une méthode expérimentale consistant à réaliser des mesures de bruit et de vibrations dans l'habitacle d'un véhicule roulant sur une portion de route ou de piste permettant de révéler un inconfort de nature vibratoire et/ou acoustique dans ledit véhicule, cette portion de route ou de piste comportant sur sa surface un ou plusieurs obstacles. Cette méthode nécessite toutefois de pouvoir disposer du véhicule pour évaluer différents systèmes de liaison au sol; en outre, elle ne peut être conduite que dans des conditions météorologiques favorables ce qui induit un temps d'immobilisation du véhicule parfois excessivement long et en conséquence un surcoût dans la phase de mise au point d'un système de liaison au sol puisque de nombreuses itérations sont souvent nécessaires. Elle est en outre longue et fastidieuse pour l'opérateur et sujette à des grandes dispersions de mesure.

De plus, la demande de brevet européen n° **886130** décrit une méthode. de prévision du niveau de bruit dans l'habitacle d'un véhicule équipé de pneumatiques et roulant sur un sol irrégulier présentant une pluralité d'aspérités. Selon cette méthode, on détermine une fonction de transfert d'un véhicule équipé de pneumatiques en appliquant directement sur chaque essieu (au centre roue) du véhicule à l'arrêt des efforts dirigés suivant des directions prédéterminées (sous la forme de chocs). On procède pour chaque impact à un enregistrement sonore à l'intérieur dudit véhicule et cette opération est répétée successivement pour chacune des positions avant et arrière et pour chaque côté du véhicule. Dans une autre étape, un pneumatique identique roule sur un volant pourvu sur sa surface de roulage d'une pluralité d'aspérités simulant un sol irrégulier. Dans ce test, le pneumatique est monté à axe fixe et les efforts résultants au centre roue sont enregistrés. Pour terminer, ces efforts résultants mesurés sont employés comme entrée d'un modèle faisant intervenir la fonction de transfert déterminée comme rappelé plus haut de façon à obtenir le niveau de bruit résultant à l'intérieur du véhicule. Cette méthode, certes intéressante, comporte toutefois des limites qui peuvent, par exemple pour des pneumatiques de même dimension mais de structures différentes, fournir des niveaux de bruits différents de ceux obtenus à partir d'essais réalisés avec le même véhicule équipé de ces différents pneumatiques et roulant sur un sol irrégulier.

En particulier, la fonction de transfert du véhicule étant établie à partir d'essais pratiqués à l'arrêt, il est clair qu'il n'est pas tenu compte des caractéristiques mécaniques des pneumatiques en roulage qui, en règle générale, sont sensiblement différentes des mêmes caractéristiques à l'arrêt. Il est notamment connu que la rigidité verticale sous sollicitation dynamique d'un pneumatique à l'arrêt est supérieure à la même rigidité verticale sous sollicitation dynamique d'un pneumatique roulant.

D'autre part, pour appliquer des efforts au niveau des essieux, il est nécessaire de prévoir l'adjonction d'une pièce fixée sur l'extérieur de la roue, ladite pièce étant destinée à recevoir les impacts d'un marteau par exemple, il est clair que la masse de cette pièce s'ajoute aux masses non suspendues et perturbe de ce fait les mesures réalisées. II faut également signaler que le bruit de chaque impact du marteau, et qu'en bien même des mesures sont prises pour l'atténuer, est transmis par voie aérienne dans l'habitacle et s'ajoute au moins partiellement au bruit que l'on souhaite enregistrer à l'intérieur du véhicule.

L'objet de l'invention est une méthode de prévision de la performance confort d'un véhicule équipé de systèmes de liaison au sol qui ne présente pas les inconvénients des méthodes qui viennent d'être rappelées.

Dans ce but, il est proposé une méthode de prédiction du bruit et des vibrations dans l'habitacle d'un véhicule équipé d'un système prototype de liaison au sol, ce véhicule roulant à une vitesse donnée V sur un sol pourvu d'au moins un obstacle de dimension prédéterminée.

La méthode proposée comporte une première étape de détermination d'une fonction de transfert globale du véhicule équipé d'un système référence de liaison au sol et une deuxième étape dans laquelle on mesure des efforts aux points d'attache avec la caisse du système prototype de liaison au sol. Ensuite, la méthode selon l'invention consiste à multiplier cette fonction de transfert globale du véhicule obtenue à la première étape par les efforts résultants aux points d'attache entre la caisse et le système prototype de liaison au sol, ledit système prototype de liaison au sol supportant en ses surfaces de contact avec le sol des charges identiques à celles mesurées sur le véhicule et roulant sur le même sol pourvu du/des même(s) obstacle(s).

La détermination de la fonction de transfert globale résulte de la mise en oeuvre d'une série de mesures sur le véhicule équipé d'un système référence de liaison au sol combinée avec une série de mesures sur ce système référence de liaison au sol fixé à un bâti en ses points d'attache à la caisse lorsqu'il est monté sur un véhicule. Dans le cas où le système de liaison au sol est réduit au pneumatique et à la roue, le bâti est équipé d'un moyeu permettant la mesure des efforts exercés au centre de la roue.

Les mesures sur véhicule comprennent les étapes suivantes :
a) on équipe le véhicule avec le système référence de liaison au sol, ledit système étant relié audit véhicule par des points d'attache;
b) on dispose à l'intérieur du véhicule des moyens aptes à enregistrer le bruit et les vibrations en des points préalablement déterminés dans l'habitacle;
c) on place le véhicule de façon que le système référence de liaison au sol soit en contact par l'intermédiaire de chaque pneumatique dudit système avec un moyen de roulage pourvu sur sa/ses surface(s) de roulage du/des obstacle(s);
d) on met en rotation, à une vitesse V, chaque pneumatique placé sur le moyen de roulage et on fait l'acquisition des signaux bruit et vibration à l'intérieur de l'habitacle;
   Ensuite, on obtient les efforts résultants aux dits points d'attache pour ce système référence de liaison au sol en suivant les.étapes suivantes :
e) on relie mécaniquement le système référence de liaison au sol à un bâti par les mêmes points d'attache, ledit bâti étant équipé en ces points de moyens de mesure des efforts résultants dans trois directions perpendiculaires entre elles;
f) on applique ledit système référence de liaison au sol contre le moyen.de roulage de l'étape c) pourvu du/des même(s) obstacle(s), de façon à ce que ledit système de liaison au sol supporte, en sa/ses surface(s) de contact avec le sol, des charges identiques aux charges supportées sur le véhicule dans la position considérée;
g) on met en rotation, à la vitesse V, chaque pneumatique placé sur le moyen de roulage et on fait l'acquisition des efforts résultants aux points d'attache au bâti.

La combinaison des valeurs mesurées, à la fois sur véhicule équipé du système référence de liaison au sol et sur le système référence de liaison au sol monté sur un bâti, permet d'obtenir la fonction de transfert globale dudit véhicule roulant sur un sol pourvu d'obstacle(s) identique(s) à ceux employés dans lesdites mesures.

Dans le cas où le système de liaison au sol est réduit au pneumatique et à sa roue de montage, on exécute à nouveau les étapes e) à g) avec les conditions propres à l'autre essieu du même véhicule et à nouveau les étapes c) et d) pour toutes les autres positions avant et arrière sur le véhicule qui n'ont pas encore été mesurées.

Il est envisageable de remplacer les mesures réalisées sur le système référence de liaison au sol (étapes e, f, g) par une simulation numérique à l'aide d'un modèle fonctionnel représentatif dudit système et permettant d'obtenir les efforts aux points d'attache à la caisse dans une configuration similaire de roulage sur obstacle.

Après détermination de la fonction de transfert globale, on mesure les efforts aux points d'attache à la caisse du même véhicule équipé d'un système prototype de liaison au sol, remplaçant le système référence de liaison, en reproduisant à l'identique les étapes e), f), g), ledit système prototype de liaison au sol étant fixé au même bâti et de la même manière que le système référence de liaison au sol précédemment testé.

Ces efforts mesurés aux points d'attache à la caisse du système prototype de liaison au sol sont alors multipliés par la fonction de transfert globale du véhicule pour obtenir les niveaux de bruit et de vibration à l'intérieur de l'habitacle et permettre ainsi de caractériser la performance confort du véhicule équipé du système prototype de liaison au sol.

Comme mentionné pour le système de référence de liaison au sol, il est également envisageable de remplacer les mesures sur le système prototype de liaison au sol (étapes e, f, g) par une simulation numérique à l'aide du même modèle fonctionnel permettant d'obtenir les efforts aux points d'attache du système prototype au bâti dans une configuration similaire de roulage sur obstacle.

La méthode selon l'invention permet d'évaluer la performance confort d'un système de liaison au sol nouveau (prototype) équipant un véhicule initialement équipé avec un système de liaison au sol connu (référence). En outre, il n'est plus nécessaire de disposer du véhicule pour évaluer un nouveau système de liaison au sol différent du système référence de liaison au sol, dès lors que la fonction de transfert globale du véhicule a été établie avec ledit système référence sur un moyen de roulage et que ce même moyen de roulage est employé pour la mesure ou la simulation numérique des efforts aux points d'attache du système prototype de liaison au sol monté sur bâti.

Pour obtenir une fonction de transfert encore plus représentative du comportement du véhicule à la vitesse V choisie, il est avantageux de refaire l'étape d) avec le véhicule et les étapes e), f), g) avec le système de liaison au sol seul pour au moins deux autres vitesses encadrant la vitesse V. Préférentiellement, on prend deux vitesses de part et d'autre de la vitesse V, ces vitesses étant environ **10**% et **35**% plus grandes et plus petites que V. Ainsi, il est possible de tenir compte des non linéarités du véhicule en fonction de la valeur de la vitesse V choisie. La fonction de transfert globale est alors obtenue en calculant la moyenne des fonctions de transfert établies pour chaque vitesse.

Dans le cas où le système de liaison au sol considéré se réduit à un pneumatique et à sa roue de montage, il a été constaté, de manière surprenante, que l'on pouvait, pour un véhicule donné, s'affranchir de la dimension du pneumatique. Ceci signifie que, pour un véhicule prévu pour être équipé avec des dimensions de pneumatique différentes (par exemple, des pneumatiques de rapport de forme H/S différents, H mesurant la largeur du pneumatique et S mesurant la hauteur de sa section transversale), il est possible de déterminer une fonction de transfert globale applicable pour toutes les dimensions acceptées par ledit véhicule. Pour cela, on procède comme décrit ci-dessus aux étapes a) à d) pour le véhicule équipé de pneumatiques de référence et e) à g) pour le même pneumatique de référence en réalisant toutes les mesures pour au moins deux autres valeurs de pression de gonflage des pneumatiques. Préférentiellement, on utilise des pressions qui sont entre **10**% à **20**% plus grandes que la pression d'utilisation du pneumatique de référence et des pressions qui sont entre **10**% à **20**% plus petites que la pression d'utilisation du pneumatique de référence. Cette façon de faire permet de prendre en compte une variation de rigidité liée à la dimension du pneumatique. La fonction de transfert globale est alors obtenue en calculant la moyenne des fonctions de transfert mesurées pour chaque pression et chaque vitesse.

Avec la méthode selon l'invention, il-est aisé de prévoir la performance confort d'autant de systèmes prototypes de liaison au sol que l'on souhaite. Le coût de cette prévision sera, pour chaque système de liaison au sol, égal au coût d'une mesure d'efforts aux points d'attache à la caisse dudit système de liaison au sol, ou au coût de la simulation numérique desdits efforts.

Si on choisit de procéder de cette manière, on mesure, par exemple, tout l'intérêt que représente cette méthode pour la mise au point d'un système de liaison au sol sur un véhicule prototype dont il n'est possible de disposer que pendant un temps bref. Grâce à la méthode selon l'invention, on peut même envisager à terme, la possibilité d'un échange de données entre un fabricant de systèmes de liaison au sol et un constructeur de véhicules sans que le fabricant de systèmes de liaison au sol ait pu disposer du véhicule, le constructeur dudit véhicule s'occupant de réaliser l'essai sur le véhicule et de fournir ensuite la fonction de transfert globale dudit véhicule au fabricant de systèmes de liaison au sol et les conditions dans lesquelles celle-ci a été établie.

Un autre avantage de la méthode selon l'invention réside dans le fait que la fonction de transfert intègre effectivement la composante du bruit résultant de l'impact même du/des pneumatiques sur le/les obstacles et que ce bruit d'impact est bien le bruit réel.

Un autre avantage réside dans le fait que ce sont effectivement les efforts réels aux points d'attache qui sont pris en compte dans la détermination de la fonction de transfert globale et dans son utilisation ultérieure pour évaluer et optimiser un nouveau système de liaison au sol.

Bien entendu la méthode selon l'invention est applicable à tout type de véhicule comme notamment des véhicules de tourisme, des camionnettes ou des poids lourd pour lesquels la performance confort est importante.

La méthode de prévision selon l'invention permet aisément d'adapter la taille et le nombre d'obstacles du moyen de roulage afin de simuler tel ou tel revêtement routier.

Signalons enfin, que l'information issue de la fonction de transfert déterminée par la méthode selon l'invention permet d'améliorer efficacement la performance confort d'un système de liaison au sol. En effet, celle-ci permet de distinguer le transfert des vibrations par la caisse du transfert des vibrations par le système de liaison au sol.

La méthode selon l'invention est illustrée par les figures suivantes et selon lesquelles :
- la figure **1** montre un véhicule de tourisme, dont le pneumatique arrière gauche est placé sur un volant;
- la figure **2** montre un système de liaison au sol monté sur un bâti, ce système de liaison comprenant le pneumatique de la figure **1** écrasé dans les mêmes conditions sur le volant de la figure **1**;
- la figure **3** montre, sous un autre angle de vue, le montage de la figure **2** ;
- la figure **4** montre un pneumatique monté sur sa roue de montage et écrasé sur un volant de roulage pour la mise en oeuvre des étapes du procédé selon l'invention;
- la figure **5** présente la comparaison du bruit enregistré à l'intérieur de l'habitacle d'un véhicule de tourisme lors du passage sur une barrette avec le bruit prédit par la méthode selon l'invention pour un système de liaison prototype;
- la figure **6** présente la comparaison des vibrations enregistrées dans une direction tangentielle au volant du véhicule lors du passage sur une barrette avec les vibrations obtenues par la méthode selon l'invention pour le système de liaison prototype de la figure **5**;
- la figure **7** reprend la comparaison des vibrations au niveau du plancher de l'habitacle avec les accélérations dans la direction verticale;
- la figure **8** présente la comparaison du bruit enregistré à l'intérieur de l'habitacle d'un véhicule de tourisme lors du passage sur une barrette avec le bruit prédit par la méthode selon l'invention dans le cas où le système de liaison est réduit à un pneumatique et à sa roue de montage;
- la figure **9** présente la comparaison des vibrations enregistrées dans une direction tangentielle au volant du véhicule lors du passage sur une barrette avec les vibrations obtenues par la méthode selon l'invention dans le cas où le système de liaison est réduit à un pneumatique et à sa roue de montage;
- la figure **10** reprend la comparaison de la figure **8** au niveau du plancher de l'habitacle avec les accélérations dans la direction verticale.

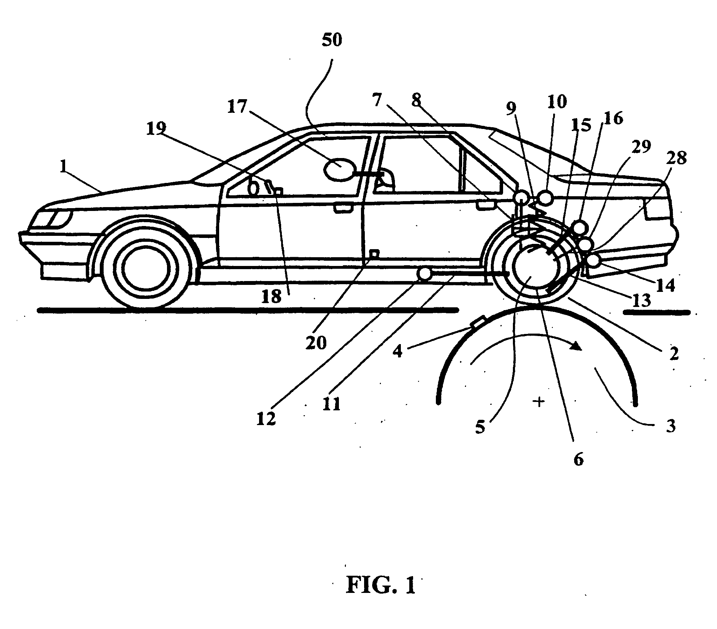

Sur la figure **1**, on distingue un véhicule de tourisme **1**, dont le pneumatique arrière gauche **2** repose sur un volant **3** de diamètre 1,6 m revêtu d'un revêtement de surface de granulométrie fine. Une barrette **4** de section droite rectangulaire de largeur **20** mm et de hauteur **10** mm est disposée transversalement sur la surface du volant **3** (c'est-à-dire parallèlement à l'axe de rotation du volant).. Des moyens non représentés sont prévus pour entraîner le volant **3** en rotation.

Dans le premier exemple présenté au moyen des figures **1, 2, 3,** le système de liaison au sol comprend les éléments suivants : un pneumatique arrière gauche **2** monté sur une roue **5**; un ensemble porte-moyeu ― moyeu; un système de freinage arrière gauche **6**; un amortisseur arrière gauche **7**; une attache supérieure **8** de l'amortisseur arrière gauche **7**; un ressort arrière gauche **9**; une pièce de filtrage **10** du ressort arrière gauche **9**; un bras longitudinal arrière gauche **11**; une articulation élastique **12** de connexion du bras longitudinal arrière gauche **11** à la caisse **50**; un bras inférieur arrière gauche **13**; une articulation élastique **14** de connexion du bras inférieur arrière gauche **13** à la caisse **50**; un bras supérieur arrière gauche **15**;une articulation élastique **16** de connexion du bras supérieur arrière gauche **15** à la caisse **50**; une biellette de pince **28** arrière gauche; une rotule **29** assurant le lien entre la biellette **28** et la caisse **50**; diverses pièces secondaires non représentées sur les figures (vis, écrous, rotule, roulements, articulations élastiques, etc.).

Le véhicule **1** est équipé à l'intérieur de son habitacle avec :
- un microphone **17** localisé au niveau de l'oreille droite d'un conducteur du véhicule pour l'enregistrement du bruit;
- un accéléromètre **18** tri-directionnel placé sur le volant de direction **19** du véhicule;
- un accéléromètre **20** tri-directionnel placé sur l'une des glissières du siège du conducteur.

La méthode selon l'invention permet de prévoir, pour une vitesse **V** choisie et dans les conditions de roulage sur volant **3** pourvu d'un obstacle **4**, la performance confort du véhicule **1** et d'analyser l'incidence sur cette performance du système de liaison au sol précédemment défini. Dans un premier temps, on réalise, dans cette position, les mesures de pression acoustique et de vibrations pour plusieurs vitesses d'entraînement du volant encadrant la vitesse de référence **V**. Par exemple, on propose des vitesses égales. à ± **20**% de la vitesse **V**.

Les valeurs obtenues de bruit et de vibration sont les sorties du système qui permettent de déterminer une fonction de transfert globale du véhicule équipé de son système de liaison au sol de référence.

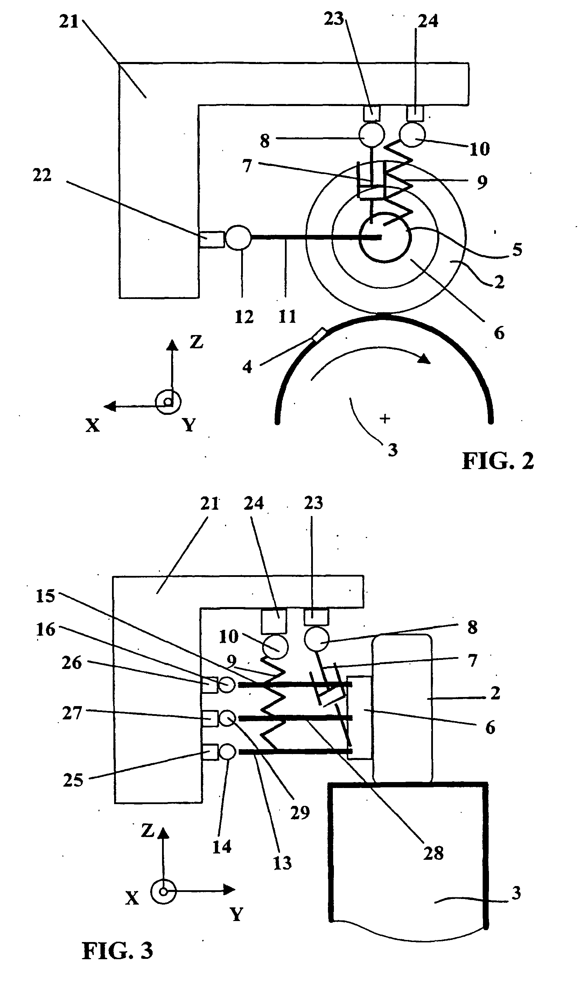

Pour obtenir les entrées du système (ces entrées multipliées par la fonction de transfert globale devant fournir les données précédemment enregistrées), on procède, comme représenté sur la figure **2** et la figure **3**, à des mesures d'efforts aux points d'attache à la caisse du système référence de liaison au sol comprenant les éléments précédemment énoncés, ledit système étant monté par ses points d'attache sur un bâti **21**, le pneumatique **2** roulant sur le même volant **3** équipé du même obstacle **4**.

Sur les figures **2** et **3**, on distingue le système. référence de liaison au sol fixé par ses points d'attache au bâti **21** et supportant, en sa surface de contact du pneumatique **2** avec le volant, la charge supportée par ce système référence lorsqu'il est monté sur le véhicule **1** tel que montré à la figure **1**.

Le plan de la figure **2** contient les directions les directions notées X et Z (la direction Y est perpendiculaire au plan de cette figure **2** et parallèle à la direction de l'axe de rotation du volant **3** ; le plan de la figure **3** contient les directions perpendiculaires Y et Z.

Le bâti **21** est conçu de façon que sa première fréquence de résonance ne soit pas comprise dans la plage, des fréquences de réalisation des mesures.

En chacun des six points d'attache du système référence de liaison au sol au bâti **21**, sont placés des capteurs d'effort **22, 23, 24, 25, 26, 27** pour enregistrer en ces points les efforts selon trois directions perpendiculaires.

Les mesures sur le système référence seul sont réalisées aux mêmes valeurs de vitesse que celles utilisées lors des mesures sur le véhicule **1** équipé du système référence de liaison au sol.

En utilisant alors les valeurs mesurées sur le véhicule équipé du système référence de liaison au sol et les valeurs mesurées sur le système référence seul, on calcule, pour chaque vitesse encadrant la vitesse V, une fonction de transfert globale caractéristique du véhicule comprenant une première fonction de transfert permettant, compte tenu des efforts aux points d'attache à la caisse, de déterminer la pression acoustique dans l'habitacle et une deuxième fonction de transfert permettant, compte tenu des mêmes efforts aux points d'attache à la caisse, d'obtenir les niveaux de vibration au volant et au plancher du véhicule.

Finalement, la fonction de transfert globale du véhicule à la vitesse V est établie en réalisant une moyenne des différentes fonctions de transfert globales obtenues pour chaque vitesse.

Ayant alors obtenu la fonction de transfert globale d'un véhicule équipé du système référence de liaison au sol, il est aisé de prévoir, pour ce même véhicule, le niveau de performance confort d'un système prototype différent du système référence. Pour cela, il suffit de reprendre les opérations précédemment décrites pour le système référence monté sur le bâti de mesure **21** comme montré à la figure **2** afin de déterminer, par exemple par la mesure, les efforts aux points d'attache au bâti sur lequel est monté le système prototype dont on cherche à caractériser le niveau de performance sur le véhicule. Ces efforts sont traités de la même manière que les efforts obtenus avec le système référence et sont ensuite multipliés par la fonction de transfert globale du véhicule précédemment déterminée.

En utilisant la méthode selon l'invention, on peut ainsi aisément modifier tel ou tel élément formant le système de liaison au sol d'un véhicule et prévoir l'incidence de ce changement sur la performance confort dudit véhicule.

Un premier exemple d'application de la méthode selon l'invention concerne un système de liaison au sol référence tel que présenté avec les figures **2** et **3**; ce système de liaison de référence comprend entre autres un pneumatique de dimension **195/65 R 15 XH1** monté sur un véhicule de référence.

Dans un premier temps, on réalise les mesures de pression acoustique et de vibrations pour plusieurs vitesses (dans le cas présent : 4**0, 50, 70,** et **80** km/h) encadrant la vitesse. de référence V égale à **60** km/h. Chaque mesure est le résultat de la moyenne de vingt tours de volant; l'acquisition est réalisée par échantillonnage spatial de **4096** points par tour de volant.

Ensuite, par transformation de Fourrier (FFT - Fast Fourrier Transforrn), on passe dans le domaine fréquentiel avant de procéder à un ré échantillonnage afin d'être homogène pour toutes les vitesses.

Les valeurs obtenues de bruit et de vibration sont les sorties du système qui permettent de déterminer une fonction de transfert globale du véhicule équipé de son système de liaison au sol de référence.

Pour obtenir les entrées du système (ces entrées multipliées par la fonction de transfert globale devant fournir les sorties précédemment enregistrées), on procède à des mesures d'efforts aux points d'attache du même système de liaison au sol de référence roulant sur le même volant équipé avec le même revêtement et le même obstacle.

Toutes les mesures sont effectuées pour une pression de 2,1 bars et une charge supportée de 275 daN correspondant aux conditions sur le véhicule de référence.

Ces mesures sont réalisées aux mêmes vitesses (**40, 50, 70** et **80** km/h) encadrant la vitesse de référence V (**60** km/h). Chaque mesure est le résultat d'une moyenne sur vingt tours de volant. L'acquisition est réalisée par échantillonnage spatial de **4096** points par tour de volant.

Enfin, par transformation de Fourrier (FFT), on passe dans le domaine fréquentiel avant de procéder à un ré échantillonnage afin d'être homogène pour toutes les vitesses choisies.

Toutes les mesures effectuées avec le véhicule et sur système de liaison au sol de référence seul sont reconduites pour deux autres pressions (**1,8** et **2,4** bars) du pneumatique encadrant la pression d'utilisation de **2.1** bars.

En utilisant alors les valeurs mesurées sur le véhicule équipé du système de liaison au sol de référence et les valeurs mesurées sur le système de liaison au sol de référence seul, on calcule, pour chaque vitesse, une fonction de transfert globale caractéristique du véhicule, c'est-à-dire une première fonction de transfert permettant, compte tenu des efforts aux points d'attache du système de liaison, de déterminer la pression acoustique dans l'habitacle et une deuxième fonction de transfert permettant, compte tenu des mêmes efforts aux points d'attache, d'obtenir les niveaux de vibration au volant et au plancher du véhicule. Enfin, une fonction de transfert globale du véhicule à la vitesse V est établie en réalisant une moyenne des différentes fonctions de transfert globales obtenues pour chaque vitesse et chaque pression.

Ayant alors obtenu la fonction de transfert globale d'un véhicule équipé d'un système de liaison au sol de référence, il est alors possible de prévoir, pour ce même véhicule, le niveau de performance confort d'un système de liaison au sol prototype différent du système de liaison au sol de référence. Pour cela, on reprend les mesures aux points d'attache du système de liaison prototype dans les mêmes conditions que celles utilisées pour le système de liaison référence.

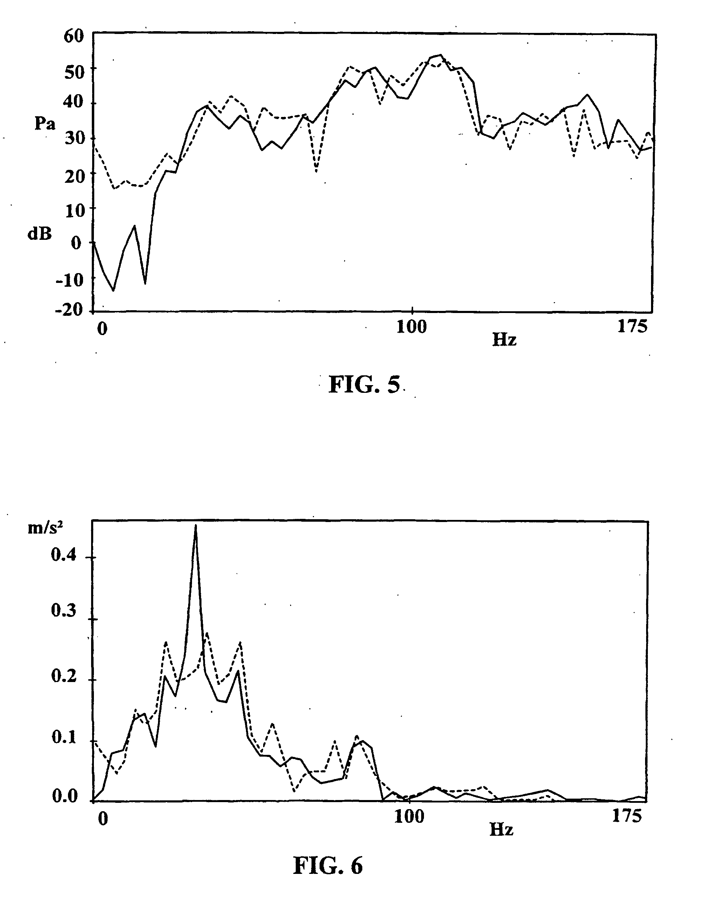

L'exemple présenté au moyen des figures **5** à **7** correspond à un système prototype de liaison au sol différant du système de liaison au sol de référence uniquement par la dimension du pneumatique employé (**205/60** R **15** M+S**330**) et de sa roue de montage correspondante.

La figure **5** montre une comparaison de la pression acoustique enregistrée (en pointillé) à l'intérieur de l'habitacle du véhicule de tourisme équipé d'un système de liaison au sol prototype lors du passage sur une barrette avec le bruit prévu (en trait plein) par la méthode selon l'invention à la même vitesse V (**60** km/h). Sur l'axe des abscisses sont portées les fréquences de 0 à175 Hz, tandis que l'axe des ordonnées est gradué en décibels (de **0** à **60** dBA).

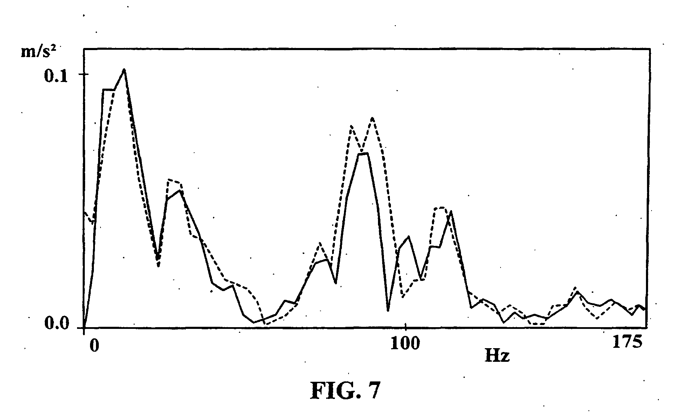

Les figures **6** et **7** comparent les valeurs mesurées sur véhicule et les valeurs prédites par le modèle selon l'invention des vibrations induites au niveau du volant de direction et au niveau du plancher suite à un routage sur un volant comportant une barrette. La figure **6** montre; en trait plein les accélérations, dans une direction tangentielle. au volant de direction du véhicule, prévues par le modèle selon l'invention et en traits pointillés les mêmes accélérations obtenues expérimentalement. La figure **7** montre, en trait plein, les accélérations, dans la direction verticale, prévues par le modèle selon l'invention au niveau du plancher du véhicule et en traits pointillés les mêmes accélérations obtenues expérimentalement.

Dans un deuxième exemple d'application de la méthode selon l'invention, le système de liaison au sol étudié comprend uniquement un pneumatique **2'** de dimension **205/65** R **15** MXT et sa roue de montage 5' correspondante.

Dans un premier temps, on réalise les mesures de pression acoustique et de vibrations pour plusieurs vitesses (dans le cas présent, **40, 50, 70,** et **80** km/h) encadrant la vitesse de référence V égale à **60** km/h. Chaque mesure est le résultat de la moyenne de vingt tours de volant; l'acquisition est réalisée par échantillonnage spatial de **1024** points par tour de volant.

Ensuite, par transformation de Fourrier (FFT - Fast Fourrier Transform), on passe dans le domaine fréquentiel avant de procéder à un ré échantillonnage afin d'être homogène pour toutes les vitesses.

Après ces mesures, faites pour la position gauche de l'essieu arrière, on procède au même type de mesure sur la position droite de l'essieu arrière puis sur les deux positions de l'essieu avant.

Les valeurs obtenues de bruit et de vibration sont les sorties du système qui permettent de déterminer une fonction de transfert globale du véhicule équipé de ces pneumatiques de référence.

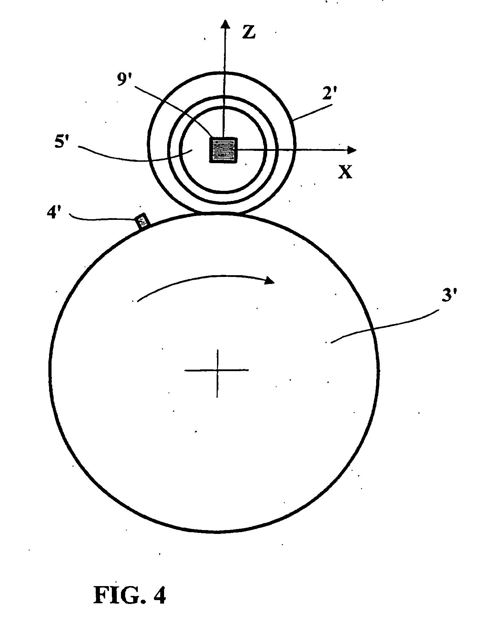

Pour obtenir les entrées du système (ces entrées multipliées par la fonction de transfert globale devant fournir les sorties précédemment enregistrées), on procède à des mesures d'efforts au centre roue d'un même pneumatique de référence monté sur la même roue de montage et roulant sur le même volant équipé du même revêtement et du même obstacle. La figure **4** montre un pneumatique de référence **2'** monté sur sa roue de montage **5'** et gonflé à sa pression d'utilisation (**2** bars) correspondant aux conditions d'utilisation en position arrière gauche d'un véhicule, ledit pneumatique **2'** étant écrasé contre un volant **3'** pourvu sur sa surface de roulage d'un obstacle **4'.** La charge imposée, **284** daN, sur ce pneumatique correspond également à la charge réelle supportée par le pneumatique situé à l'arrière gauche du véhicule de façon à se placer dans les conditions de roulage réalistes. La roue de montage **5'** est placée sur un moyeu dynamométrique **9'** permettant d'enregistrer les efforts au centre de ladite roue selon trois directions perpendiculaires, deux desdites directions notées X et Z étant dans le plan de la figure et la troisième étant parallèle à l'axe de rotation du volant sur lequel roule le pneumatique.

Ces mesures sont réalisées avec le moyeu dynamométrique **9'**, aux mêmes vitesses (**40**, **50, 70** et **80** km/h) encadrant la vitesse de référence V (**60** km/h). Chaque mesure est le résultat d'une moyenne sur vingt tours de volant. L'acquisition est réalisée par échantillonnage spatial de 1024 points par tour de volant.

Les mêmes mesures sont ensuite réalisées sur le même pneumatique de référence en employant les conditions d'utilisation (pression égale à **2** bars, charge égale à **483** daN) correspondant aux conditions des pneumatiques de l'essieu avant du même véhicule.

Enfin, par transformation de Fourrier (FFT), on passe dans le domaine fréquentiel avant de procéder à un ré échantillonnage afin d'être homogène pour toutes les vitesses choisies.

Toutes les mesures effectuées avec le véhicule et sur pneumatique de référence seul sont reconduites pour deux autres pressions (**1,7** et **2,3** bars) encadrant la pression d'utilisation de **2** bars.

En utilisant alors les valeurs mesurées sur le véhicule équipé de pneumatiques de référence et les valeurs mesurées sur pneumatique référence seul, on calcule, pour chaque vitesse, une fonction de transfert globale caractéristique du véhicule, c'est-à-dire une première fonction de transfert permettant, compte tenu des efforts au centre de roue, de déterminer la pression acoustique dans l'habitacle et une deuxième fonction de transfert permettant, compte tenu des mêmes efforts au centre de roue, d'obtenir les niveaux de vibration au volant et au plancher du véhicule. Enfin, une fonction de transfert globale du véhicule à la vitesse V est établie en réalisant une moyenne des différentes fonction de transfert globales obtenues pour chaque vitesse et chaque pression.

Ayant alors obtenu la fonction de transfert globale d'un véhicule équipé de pneumatiques de référence de dimension **205/65** R **15** MXT, il est aisé de prévoir, pour ce même véhicule, le niveau de performance confort d'un pneumatique d'essai différent du pneumatique de référence. Pour cela, il suffit de reprendre les opérations décrites avec le support de la figure **4** afin de déterminer les efforts au centre de la roue de montage sur laquelle est monté le pneumatique d'essai dont on cherche à caractériser le niveau de performance sur le véhicule. Ces efforts sont traités de la même manière que les efforts obtenus avec le pneumatique de référence et sont ensuite multipliés par la fonction de transfert globale du véhicule précédemment déterminée.

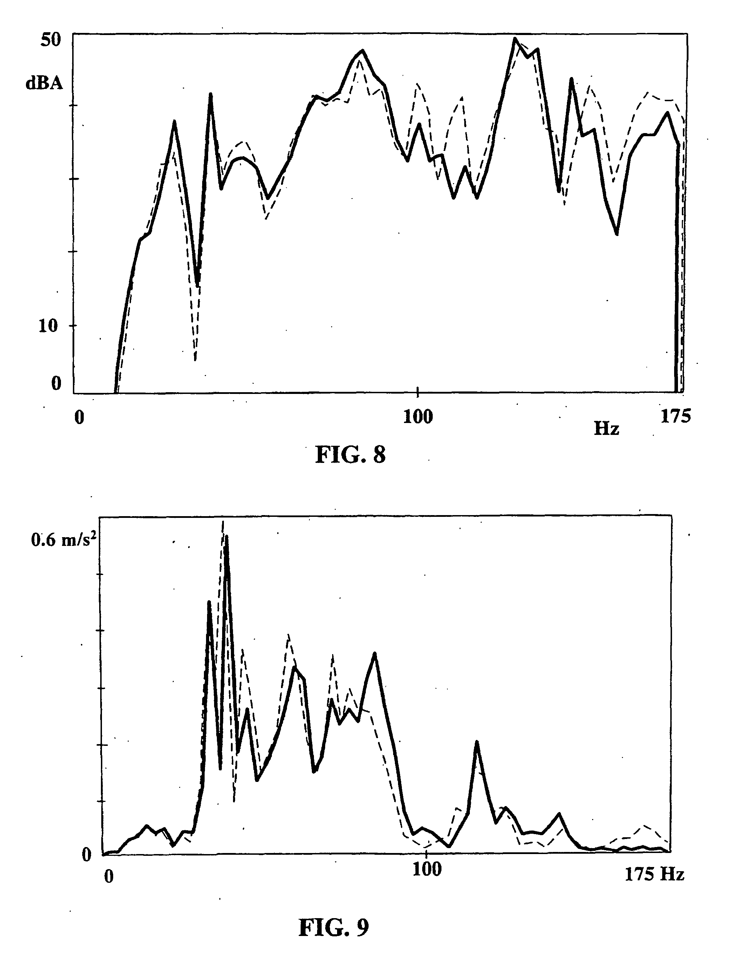

La figure **8** montre une comparaison de la pression acoustique enregistrée (en pointillé) à l'intérieur de l'habitacle d'un véhicule de tourisme équipé de pneumatiques d'essai de dimension **205/60** R **15**M+S**330** lors du passage sur une barrette avec le bruit prévu (en trait plein) par la méthode selon l'invention à la même vitesse V égale à **60** km/h. Sur l'axe des abscisses sont portées les fréquences entre **0** et **175** Hz, tandis que l'axe des ordonnées est gradué en décibels (de **0** à **50** dBA).

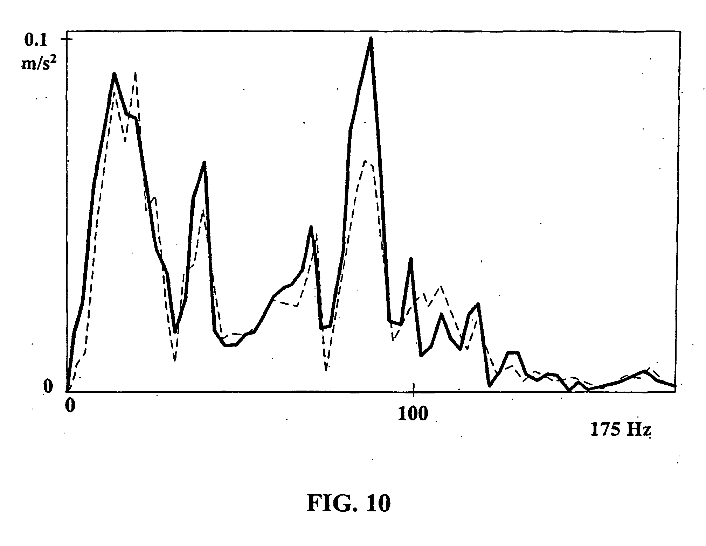

Les figures **9** et **10** comparent les valeurs mesurées sur véhicule et les valeurs prédites par le modèle selon l'invention des vibrations induites au niveau du volant de direction et au niveau du plancher suite à un roulage sur un volant comportant une barrette. La figure **9** montre, en trait plein les accélérations, dans une direction tangentielle au volant de direction du véhicule, prévues par le modèle selon l'invention et en traits pointillés les mêmes accélérations obtenues expérimentalement. La figure **10** montre, en trait plein, les accélérations, dans la direction verticale, prévues par le modèle selon l'invention au niveau du plancher du véhicule et en traits pointillés les mêmes accélérations obtenues expérimentalement.

Les résultats obtenus avec les deux exemples présentés démontrent de façon suffisamment claire que la méthode selon l'invention est très prédictive du niveau de la performance confort pour un nouveau système de liaison au sol ou un nouveau pneumatique monté sur un véhicule quand on ne dispose pas de façon. permanente de ce véhicule pour refaire les mesures avec de nouveaux pneumatiques d'essai.

Bien sûr, ce qui a été décrit sur un moyen de roulage de type volant peut être réalisé sur une machine de roulage reproduisant des conditions de routage proche d'un sol plan (notamment machine à "bande plate").

## Revendications

1. Méthode de prévision de la performance confort correspondant au niveau acoustique et/ou vibratoire dans l'habitacle d'un véhicule (**1**) équipé d'un système prototype de liaison au sol, ledit véhicule roulant à une vitesse donnée **V** sur un moyen de roulage (**3, 3'**) comportant sur sa surface de roulage au moins un obstacle (**4, 4'**) de dimension prédéterminée, cette méthode de détermination consistant :
- dans un premier temps, à obtenir une fonction de transfert globale du véhicule équipé d'un système référence de liaison au sol en mesurant les niveaux de bruit et/ou de vibration à l'intérieur du véhicule lorsque celui-ci roule à la vitesse V sur le moyen de roulage pourvu du/des obstacle(s) et en mesurant ou en calculant à l'aide d'un modèle numérique fonctionnel les efforts aux points d'attache à la caisse du même système référence de liaison au sol au cours d'un roulage à la même vitesse V sur le même moyen de roulage pourvu du/des obstaclé(s);
- dans un deuxième temps, à mesurer ou à calculer à l'aide d'un modèle numérique fonctionnel les efforts aux points d'attache à la caisse du système prototype de liaison au sol dans les mêmes conditions de roulage que celles employées précédemment pour le système référence de liaison au sol;
- dans un dernier temps, en calculant les sorties bruit et/ou vibrations dans le véhicule en multipliant la fonction de transfert globale du véhicule par les efforts aux points d'attache à la caisse du système prototype de liaison au sol.

2. Méthode selon la revendication **1 caractérisée en ce que**, pour déterminer la fonction de transfert globale, il est procédé à des mesures sur le véhicule (**1**) selon les étapes suivantes :
a) on équipe le véhicule avec le système référence de liaison au sol;
b) on dispose à l'intérieur du véhicule de moyens (**17, 18, 20**) aptes à enregistrer le bruit et les vibrations en des points préalablement déterminés dans l'habitacle;
c) on place ledit système référence de liaison au sol sur un moyen de roulage (**3**) pourvu sur sa surface de roulage du/des obstacle(s) (**4**);
d) on met en rotation, à la vitesse V, chaque pneumatique placé sur le moyen de roulage (3) et on fait l'acquisition des signaux bruit et vibration à l'intérieur de l'habitacle; et il est procédé à des mesures sur ledit système référence de liaison au sol selon les étapes suivantes :
e) en ses points d'attache à la caisse, on fixe le système référence de liaison au sol à un bâti équipé aux dits points d'attache de moyens de mesure des efforts exercés dans trois directions perpendiculaires;
f) on écrase ledit système référence de liaison au sol contre le moyen de roulage de l'étape c) pourvu du/des même(s) obstacle(s), de façon à ce que ledit système de liaison au sol supporte, en sa/ses surfaces de contact avec le sol, des charges identiques aux charges supportées sur le véhicule dans la position considérée;
g) on met en rotation, à la vitesse V, chaque pneumatique placé sur le moyen de roulage et on fait l'acquisition des efforts résultants aux points d'attache au bâti du système référence de liaison au sol.

3. Méthode selon la revendication **2 caractérisée. en ce que** l'obtention de la fonction de transfert globale se fait en réitérant les mesures décrites aux étapes a) à g) pour au moins deux autres vitesses encadrant la vitesse V et en faisant une moyenne des fonctions de transfert obtenues pour toutes ces vitesses.

4. Méthode selon la revendication **3 caractérisée en ce que** les vitesses supplémentaires choisies sont entre **10**% et **35**% plus petite et plus grande que la vitesse V.

5. Méthode selon la revendication **2 caractérisée en ce que** le système de liaison au sol est limité au pneumatique et à sa roue de montage et **en ce qu'**on exécute à nouveau les étapes c) et d) pour toutes les autres positions avant et arrière sur le véhicule et **en ce que** le bâti est équipé d'un moyeu permettant la mesure des efforts exercés au centre de la roue.

6. Méthode selon la revendication **5 caractérisée en ce que** le système de liaison au sol analysé comprend un pneumatique et sa roue de montage et **en ce que** les étapes de mesures a) à d) avec le véhicule équipé de pneumatiques de référence et e) à g) pour le pneumatique seul (de référence et d'essai) sont réalisées pour au moins deux autres valeurs supplémentaires de pression de gonflage, lesdites valeurs encadrant la pression d'utilisation.

7. Méthode selon la revendication **6 caractérisée en ce qu'**une pression supplémentaire est entre **10**% à **20**% plus grande que la pression d'utilisation du pneumatique de référence et qu'une autre pression supplémentaire est entre **10**% à **20**% plus petite que la pression d'utilisation du pneumatique de référence.

## Patentansprüche

1. Verfahren zur Vorhersage der Komfortleistung entsprechend dem Geräuschpegel und/oder dem Vibrationspegel im Innenraum eines mit einem Prototyp-Verbindungssystem mit dem Boden ausgestatteten Fahrzeugs ( 1 ), wobei das Fahrzeug mit einer gegebenen Geschwindigkeit V auf einer Rolleinrichtung (3, 3') rollt, die auf ihrer Rollfläche mindestens ein Hindernis (4, 4') von vorbestimmter Größe aufweist, wobei dieses Bestimmungsverfahren darin besteht:
- in einem ersten Schritt eine globalen Übertragungsfunktion des mit einem Bezugs-Verbindungssystem mit dem Boden ausgestatteten Fahrzeugs zu erhalten, indem die Geräuschund/ oder Vibrationspegel im Innenraum des Fahrzeugs gemessen werden, wenn dieses mit der Geschwindigkeit V auf der mit dem (den) Hindemis(sen) ausgestatteten Rolleinrichtung rollt, und indem mit Hilfe eines digitalen Funktionsmodells die Kräfte an den Verbindungspunkten des Bezugs-Verbindungssystems mit dem Boden am Aufbau beim Rollen mit der gleichen Geschwindigkeit V auf der gleichen mit dem (den) Hindemis(sen) ausgestatteten Rolleinrichtung gemessen oder berechnet werden,
- in einem zweiten Schritt mit Hilfe eines digitalen Funktionsmodells die Kräfte an den Verbindungspunkten des Prototyp-Verbindungssystems mit dem Boden mit dem Aufbau unter den gleichen Rollbedingungen wie diejenigen gemessen oder berechnet werden, die vorher für das Bezugs-Verbindungssystem mit dem Boden verwendet wurden;
- in einem dritten Schritt die Geräusch- und/ oder Vibrations-Ausgangsdaten im Fahrzeug zu berechnen, indem die globale Übertragungsfunktion des Fahrzeugs mit den Kräften an den Verbindungspunkten des Prototyp-Verbindungssystems mit dem Boden mit dem Aufbau multipliziert wird.

2. Verfahren nach Anspruch 1, **dadurch gekennzeichnet, dass** zur Bestimmung der globalen Übertragungsfunktion Messungen am Fahrzeug ( 1 ) gemäß den folgenden Schritten durchgeführt werden:
a) das Fahrzeug wird mit dem Bezugs-Verbindungssystem mit dem Boden ausgestattet;
b) im Inneren des Fahrzeugs werden Mittel (17, 18, 20) angeordnet, die das Geräusch und die Vibrationen an vorher bestimmten Punkten im Fahrzeuginnenraum aufzeichnen können;
c) das Bezugs-Verbindungssystem mit dem Boden wird auf eine Rolleinrichtung (3) aufgebracht, die auf ihrer Rollfläche mit dem (den) Hindernis(sen) (4) versehen ist;
d) jeder auf der Rolleinrichtung (3) angeordnete Luftreifen wird mit einer Geschwindigkeit V in Drehung versetzt, und die Geräusch- und Vibrationssignale im Fahrzeuginnenraum werden erfasst;
und es werden Messungen am Bezugs-Verbindungssystem mit dem Boden gemäß den folgenden Schritten durchgeführt:
e) man verbindet das Bezugs-Verbindungssystem mit dem Boden über seine Verbindungspunkte mit einem Gestell, das an den Verbindungspunkten mit Mitteln zur Messung der in drei zueinander senkrechten Richtungen ausgeübten Kräfte ausgestattet ist;
f) man quetscht das Bezugs-Verbindungssystem mit dem Boden gegen die Rolleinrichtung des Schritts c), die mit dem (den) gleichen Hindernis(sen) ausgestattet ist, damit das Bezugs-Verbindungssystem mit dem Boden auf seiner (seinen) Kontaktfläche(n) mit dem Boden die gleichen Lasten trägt wie diejenigen, die vom Fahrzeug in der betrachteten Stellung getragen werden;
g) man versetzt den auf die Rolleinrichtung aufgebrachten Luftreifen mit der Geschwindigkeit V in Drehung, und man erfasst die entstehenden Kräfte an den Verbindungspunkten des Bezugs-Verbindungssystems mit dem Boden mit dem Gestell.

3. Verfahren nach Anspruch 2, **dadurch gekennzeichnet, dass** die globale Übertragungsfunktion erhalten wird, indem die in den Schritten a) bis g) beschriebenen Messungen für mindestens zwei weitere Geschwindigkeiten wiederholt werden, die um die Geschwindigkeit V herum liegen, und indem ein Mittelwert der erhaltenen Übertragungsfunktionen für alle diese Geschwindigkeiten erstellt wird.

4. Verfahren nach Anspruch 3, **dadurch gekennzeichnet, dass** die gewählten zusätzlichen Geschwindigkeiten zwischen 10% und 35% höher bzw. niedriger als die Geschwindigkeit V gewählt werden.

5. Verfahren nach Anspruch 2, **dadurch gekennzeichnet, dass** das Verbindungssystem mit dem Boden auf den Luftreifen und sein Montagerad begrenzt ist, und dass die Schritte c) und d) erneut für alle anderen vorderen und hinteren Positionen am Fahrzeug durchgeführt werden, und dass das Gestell mit einer Nabe ausgestattet ist, die die Messung der ausgeübten Kräfte an der Radmitte ermöglicht.

6. Verfahren nach Anspruch 5, **dadurch gekennzeichnet, dass** das analysierte Verbindungssystem mit dem Boden einen Luftreifen und sein Montagerad aufweist, und dass die Messschritte a) bis d) mit dem mit Bezugs-Luftreifen ausgestatteten Fahrzeug und die Schritte e) bis g) für den (Bezugs- und Versuchs-)Luftreifen alleine für mindestens zwei zusätzliche Aufpumpdruckwerte durchgeführt werden, wobei diese Werte um den Betriebsluftdruck herum liegen.

7. Verfahren nach Anspruch 6, **dadurch gekennzeichnet, dass** ein Zusatzdruck zwischen 10% und 20% höher ist als der Betriebsluftdruck des Bezugs-Luftreifens, und dass ein weiterer zusätzlicher Druck zwischen 10% und 20% niedriger als der Betriebsluftdruck des Bezugs-Luftreifens ist.

## Claims

1. Method for predicting the comfort performance corresponding to the acoustic and/or vibration level in the cabin of a vehicle (**1**) fitted with a prototype ground contact system, when the said vehicle is rolling at a given speed **V** on rolling means (**3, 3'**) comprising on the surface at least one obstacle (**4, 4'**) of predetermined size, the said determination method consisting:
- firstly, in obtaining an overall transfer function for the vehicle fitted with a reference ground contact system by measuring the noise and/or vibration levels inside the vehicle when it is rolling at speed **V** on the rolling means provided with the obstacle(s) and measuring or calculating with the aid of a functional numerical model the forces that act at the attachment points to the body of the same reference ground contact system while rolling at the same speed **V** on the same rolling means provided with the obstacle(s);
- secondly, measuring or calculating with the aid of a functional numerical model the forces that act at the body attachment points of the prototype ground contact system under the same rolling conditions as those previously used for the reference ground contact system;
- and lastly, calculating the noise and/or vibrations outputs in the vehicle by multiplying the vehicle's overall transfer function by the forces acting at the body attachment points of the prototype ground contact system.

2. Method according to Claim **1**,
**characterised in that**
to determine the overall transfer function, measurements are made on the vehicle (**1**) in accordance with the following stages:
a) the vehicle is fitted with the reference ground contact system;
b) means (**17, 18, 20**) are positioned inside the vehicle which can record the noise and vibrations at predetermined points in the cabin;
c) the said reference ground contact system is then placed on rolling means (**3**) provided on the rolling surface with an obstacle or obstacles (**4**);
d) each tyre placed on the rolling means (**3**) is caused to rotate at speed V and the noise and vibration signals inside the cabin are recorded;
and measurements are made using the said reference ground contact system in accordance with the following stages:
e) at its body attachment points, the reference ground contact system is fixed to a frame equipped at the said attachment points with means for measuring the forces acting in three perpendicular directions;
f) the said reference ground contact system is pressed against the rolling means of stage c) provided with the same obstacle(s), such that the said ground contact system supports on its contact surface(s) with the ground loads identical to the loads supported on the vehicle in the position considered;
g) each tyre placed on the rolling means is caused to rotate at speed **V**, and the forces acting at the attachment points of the reference ground contact system to the frame are recorded.

3. Method according to Claim **2,**
**characterised in that**
the overall transfer function is obtained by repeating the measurements described in stages a) to g) for at least two other speeds which bracket the speed V and averaging the transfer functions obtained for all these speeds.

4. Method according to Claim **3**,
**characterised in that**
the additional speeds chosen are between **10**% and **35**% lower and higher than the speed **V**.

5. Method according to Claim **2**,
**characterised in that**
the ground contact system is limited to the tyre and the wheel to which it is fitted, and stages c) and d) are repeated for all the other front and rear positions on the vehicle, and the frame is equipped with a hub which enables the forces acting at the centre of the wheel to be determined.

6. Method according to Claim **5**,
**characterised in that**
the ground contact system analysed comprises a tyre and the wheel to which it is fitted, and the measurement stages a) to d) with the vehicle fitted with reference tyres and e) to g) for the tyre alone (reference and test) are carried out with at least two additional inflation pressure values, the said values bracketing the working pressure.

7. Method according to Claim **6**,
**characterised in that**
an additional pressures is between **10**% and **20**% higher than the working pressure of the reference tyre and another additional pressure is between **10**% and **20**% lower than the working pressure of the reference tyre.
